# EUROPEAN PATENT APPLICATION

(11) **EP 4 583 314 A1**
(43) Date of publication of application: **09.07.2025**
(21) Application number: 23935878.1
(22) Date of filing: 10.11.2023
(51) Int. Cl.: H01R 4/00, H01R 13/02

(54) **BATTERY ASSEMBLY**

(71) Applicant: Shenzhen Shokz Co., Ltd., Shenzhen, Guangdong 518108 (CN)
(72) Inventor: XIE, Shuailin, Shenzhen, Guangdong 518108 (CN); LIU, Chunjian, Shenzhen, Guangdong 518108 (CN)
(74) Representative: Wang, Bo
(86) International application number: PCT/CN2023/131014
(87) International publication number: WO 2025/097432

(57) **Abstract**

The present disclosure provides a battery assembly that solves the problem of low space utilization of battery assembly in the prior art. The battery assembly includes a circuit board, a male connector, a female connector, a wire, and a battery. The wire is electrically connected to the male connector. The battery includes a step structure. The circuit board is provided on the step structure and is electrically connected to the battery. The female connector is provided on the circuit board and is electrically connected to the circuit board, and the male connector is capable of being plugged into the female connector. When the male connector is plugged into the female connector, the female connector is electrically connected to the male connector. The present disclosure may effectively improve space utilization and simplify the assembly process of battery assembly.

## Description

### TECHNICAL FIELD

The present disclosure relates to a technical field of batteries, and in particular, to battery assemblies.

### BACKGROUND

Battery assemblies are important components that provide energy for all types of digital products, enabling them to operate independently without the need to be connected to a power source. A battery assembly usually consists of a battery, wires, a circuit boards, etc. The battery is generally set at intervals with the circuit board, and the wires are welded and fixed to soldering joints on the circuit board, thereby realizing electrical connection between the wires and the circuit board. It is important to reduce the size of battery assembly in small digital product where there are restrictions on size. Existing technology, for the battery assembly occupying a large volume, is not conducive to product miniaturization design. Thus, reducing the size of the components and rationally arranging the location of the components to reduce the size of the battery assembly has become a key means of improving the competitiveness of the digital products.

### SUMMARY

The present disclosure relates to the field of battery technology, and in particular, to a battery assembly, which solves the problem of low space utilization rate of battery assembly in the existing technology.

Some embodiments of the present disclosure provide a battery assembly comprising a circuit board, a male connector, a female connector, a wire, and a battery. The wire may be electrically connected to the male connector. The battery may include a step structure, and the circuit board is provided on the step structure and is electrically connected to the battery. The female connector may be provided on the circuit board and is electrically connected to the circuit board, and the male connector may be capable of being plugged into the female connector. The female connector may be electrically connected to the male connector when the male connector is plugged into the female connector.

In some embodiments, the female connector may be provided with a slot in a direction away from the circuit board, and the male connector is plugged into the female connector through the slot.

In some embodiments, the male connector may include a plug member and a plurality of first metal members. The plug member may be provided with a plurality of cavities for accommodating the plurality of first metal members. Each of the plurality of first metal members may be fixed in one of the plurality of cavities. The plurality of first metal members may be configured to electrically connect the wire and the female connector.

In some embodiments, each of the plurality of first metal members may include two elastic pieces provided opposite to each other. The female connector may include a female connector body and a plurality of second metal members. When the plug member is plugged with the female connector, the plurality of second metal members may be plugged between the two elastic pieces of each of the plurality of first metal members and electrically connected to the two elastic pieces, so that the plurality of first metal members are electrically connected with the female connector.

In some embodiments, the wire may include a signal wire and a covering layer wrapped around the signal wire. Each of the plurality of first metal members may be further provided with a U-shaped portion, the U-shaped portion may be provided with a U-shaped notch, the wire may pass through the U-shaped notch, and at least a portion of the wire located within the U-shaped notch may exclude the covering layer and the signal wire contacts an inner wall of the U-shaped notch, so that the plurality of first metal members are electrically connected to the wire.

In some embodiments, an opening direction of the U-shaped notch may be away from the circuit board. A width of the U-shaped notch at a position furthest away from the circuit board may not be less than a diameter of the wire, and a width of at least a portion of the U-shaped notch at a position close to the circuit board may not be greater than a diameter of the signal wire.

In some embodiments, the plurality of first metal members may include a plurality of U-shaped portions. The plurality of U-shaped portions may be arranged in a direction of the wire. Adjacent U-shaped portions of the plurality of U-shaped portions may be connected by a connection portion.

In some embodiments, the plug member may be provided with a U-shaped structure. A width of the U-shaped structure may transition from greater than a diameter of the wire to less than the diameter of the wire to greater than the diameter of the wire from a direction near the circuit board towards an opening direction of the U-shaped structure.

In some embodiments, the battery assembly may comprise a plurality of the wires, and the plurality of the wires are parallel connected to the male connector. In a state in which the plurality of wires are drawn to be parallel, a distance between centerlines of at least a portion of the adjacent wires may be less than or equal to 1.2 mm, or less than or equal to 1 mm, or less than or equal to 0.7 mm.

In some embodiments, one of the male connector and the female connector may include a snapping groove parallel to a direction of the wire, and the other of the male connector and the female connector may include a protrusion. The protrusion may be embedded in the snapping groove when a plug member is plugged with the female connector.

In some embodiments, one of the male connector and the female connector may include a snapping groove perpendicular to a direction of the wire, and the other of the male connector and the female connector may include a protrusion. The protrusion may be embedded in the snapping groove when a plug member is plugged with the female connector.

In some embodiments, the battery assembly may comprise a plurality of female connectors. The plurality of the female connectors may be disposed on the circuit board, and at least a portion of a plurality of second metal members of at least two of the plurality of female connectors may be electrically connected.

In some embodiments of the present disclosure, the battery of the battery assembly includes a step structure, and the circuit board may be provided on the step structure, which may avoid the circuit board from occupying additional space. Moreover, the wire may be electrically connected to the male connector, and the female connector may be provided on the circuit board and may be electrically connected to the circuit board, so that the wire may be electrically connected to the circuit board by means of plugging the male connector to the female connector. The space required for the connection position of the wire and the circuit board is smaller compared to that of the wire being soldered to the circuit board, which further reduces the space occupied by the circuit board and effectively improves the space utilization rate of the battery module. In addition, the electrical connection between the wire and the circuit board may be realized by plugging the male connector to the female connector, which may simplify the assembly process of the battery assembly.

The battery assembly provided in some other embodiments of the present disclosure may comprise a circuit board, a male connector, a female connector, a battery, and a plurality of wires. The plurality of the wires may be provided in parallel and electrically connected to the male connector. The female connector may be provided on the circuit board and electrically connected to the circuit board, and a plug member is plugged into the female connector in aa direction away from the circuit board. The male connector may be electrically connected to the male connector when the male connector is plugged with the female connector. A distance between at least a portion of adj acent wires of the plurality of wires may not be greater than 1 mm, or not greater than 0.7 mm.

In this embodiment, the electrical connection between the wires and the circuit board is realized by plugging the male connector and female connector, which occupies less space compared to the wires soldered to the circuit board. The male connector is plugged along the direction away from the circuit board and the female connector, so that more components may be arranged on the circuit board without causing interference, reducing the necessary dimensions of the circuit board, and further saving the space. By means of the structural design of the male connector and female connector, it is possible to make the distance between the wires not greater than 1 mm, and the size of the circuit board and the occupied space are less, which may greatly reduce the occupied space.

Some embodiments of the present disclosure also provide a wearable device comprising the battery assembly described above. The wearable device provided by the embodiment of the present disclosure includes the above-described battery assembly. Since the above-described battery assembly occupies less space, it is possible to make the layout of the components included in the wearable device more compact, and the size and weight of the wearable device may be further reduced, thereby improving the comfort of wearing. Moreover, in some embodiments, the above battery assembly may be assembled by plugging the male connector with the female connector, which may simplify the assembly process of the wearable device.

In some embodiments, the wire of the battery assembly may be connected to the functional assembly. Another end of at least a portion of the wire away from the circuit board may be connected with another male connector. The functional assembly may be provided with the female connector plugged into the other plug member. In this embodiment, male connectors are provided at both ends of at least a portion of the wire, which may further save space and facilitate assembly.

### BRIEF DESCRIPTION OF THE DRAWINGS

The present disclosure may be further described in terms of exemplary embodiments, which may be described in detail with reference to the drawings. These embodiments are not limiting, and other configurations may be obtained from the structures illustrated in these accompanying drawings without creative labor for those of ordinary skill in the art, wherein:
FIG. 1A is a schematic diagram illustrating a structure of a battery assembly according to some embodiments of the present disclosure;
FIG. 1B is an exploded view of the battery assembly of FIG. 1A;

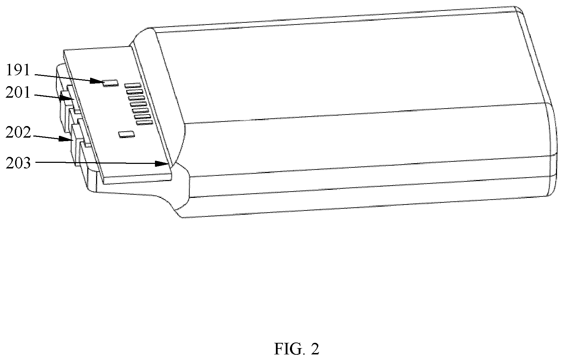

FIG. 2 is a schematic diagram illustrating a structure of a battery according to some embodiments of the present disclosure;

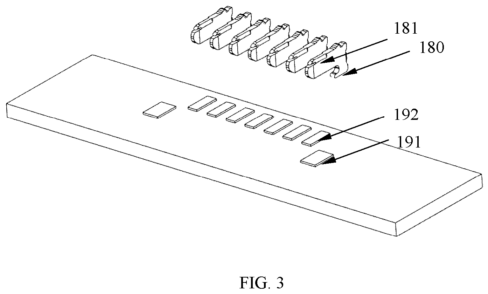

FIG. 3 is a schematic diagram illustrating a structure of a second metal member and a circuit board according to some embodiments of the present disclosure;
FIG. 4 is a schematic diagram illustrating a structure of a manner of a male connector being plugged into a female connector according to some embodiments of the present disclosure;
FIG. 5 is a schematic diagram illustrating a structure of a cavity of a plug member and a first metal member according to some embodiments of the present disclosure;
FIG. 6A is a schematic diagram illustrating a structure of a wire, a first metal member, and a second metal member according to some embodiments of the present disclosure;
FIG. 6B is a schematic diagram illustrating a structure of a wire, a first metal member, and a second metal member according to some embodiments of the present disclosure;
FIG. 6C is a schematic diagram illustrating a structure of a wire, a first metal member, and a second metal member according to some embodiments of the present disclosure;
FIG. 6D is a schematic diagram illustrating a structure of a wire, a first metal member, and a second metal member according to some embodiments of the present disclosure;

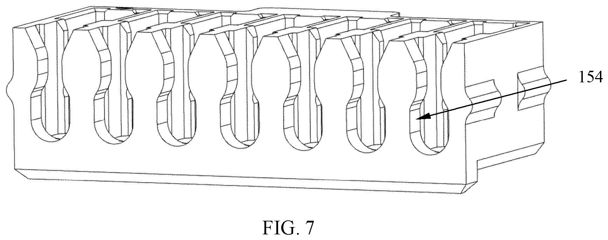

FIG. 7 is a schematic diagram illustrating a structure of a plug member according to some embodiments of the present disclosure;

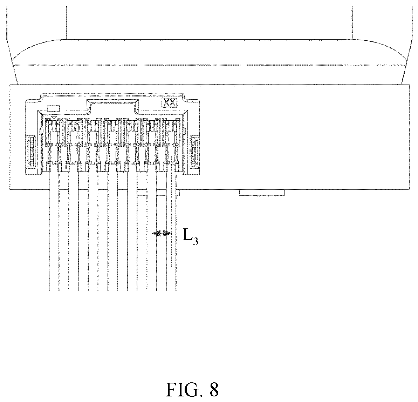

FIG. 8 is a schematic diagram illustrating a structure of a wire according to some embodiments of the present disclosure;

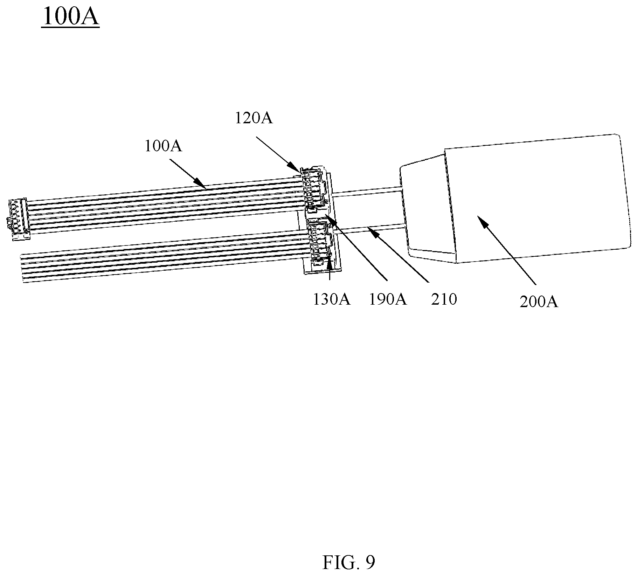

FIG. 9 is a schematic diagram illustrating a structure of a battery assembly connected to a circuit board with wires according to some embodiments of the present disclosure; and

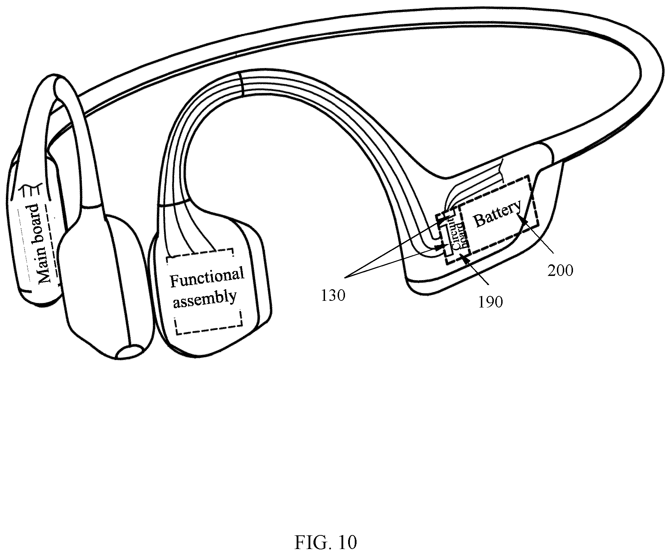

FIG. 10 is a schematic structural diagram illustrating a layout of a battery assembly in an electronic device according to some embodiments of the present disclosure.

### DETAILED DESCRIPTION

To more clearly illustrate the technical solutions related to the embodiments of the present disclosure, a brief introduction of the drawings referred to the description of the embodiments is provided below. Obviously, the drawings described below are only some examples or embodiments of the present disclosure. Those having ordinary skills in the art, without further creative efforts, may apply the present disclosure to other similar scenarios according to these drawings. Unless obviously obtained from the context or the context illustrates otherwise, the same numeral in the drawings refers to the same structure or operation.

As shown in the present disclosure and claims, the words "one," "a," "a kind," and/or "the" are not especially singular but may include the plural unless the context expressly suggests otherwise. In general, the terms "comprise", "comprises", "comprising," "include," "includes,", and/or "including", merely prompt to include operations and elements that have been clearly identified, and these operations and elements do not constitute an exclusive listing. The methods or devices may also include other operations or elements.

It should be understood that "system," "device," "unit," and/or "module" as used herein is a manner used to distinguish different components, elements, parts, sections, or assemblies at different levels. However, if other words serve the same purpose, the words may be replaced by other expressions.

Various terms are used to describe the spatial and functional relationships between elements (e.g., layers), including "connection," "joint," "interface," and "coupling". Unless explicitly described as "direct", when describing the relationship between the first and second elements in the present disclosure, the relationship includes a direct relationship in which no other intermediate element exists between the first and second elements, as well as an indirect relationship in which one or more intermediate elements (spatially or functionally) exist between the first and second elements. In contrast, when elements are the to be "directly" connected, joined, interfaced, or coupled to another element, there is no intermediate element. In addition, spatial and functional relationships between components may be realized in various ways. For example, a mechanical connection between two elements may include a welded connection, a keyed connection, a pinned connection, an interference fit connection, etc., or any combination thereof. Other terms used to describe relationships between elements should be interpreted in a similar manner (e.g., "between," "in relation to," "adjacent to," "directly adjacent to", etc.).

The present disclosure provides a wearable device, comprising a holding compartment, a battery assembly, and a functional assembly. The battery assembly and the functional assembly are housed in the holding compartment, and the battery assembly is configured to power the functional assembly. It may be appreciated that the holding compartment of some embodiments includes a battery compartment and a functional assembly holding compartment. The battery assembly is housed in the battery compartment, the functional assembly is housed in the functional assembly holding compartment, and the battery compartment is connected to the functional assembly holding compartment by a connection member. In some other embodiments, the battery assembly and functional assembly are housed in one holding compartment. In the embodiments of the present disclosure, the wearable device may be a wearable product such as headphones, audio glasses, augmented reality (AR) glasses, virtual reality (VR) glasses, or the like. The present disclosure is described in terms of a wearable device as an example of a headphone. In the embodiment of the present disclosure, the headphone includes a battery assembly and a functional assembly, which may include various functional structures such as a speaker assembly for sound generation, a microphone assembly for talking, etc., and/or a motherboard for signal processing.

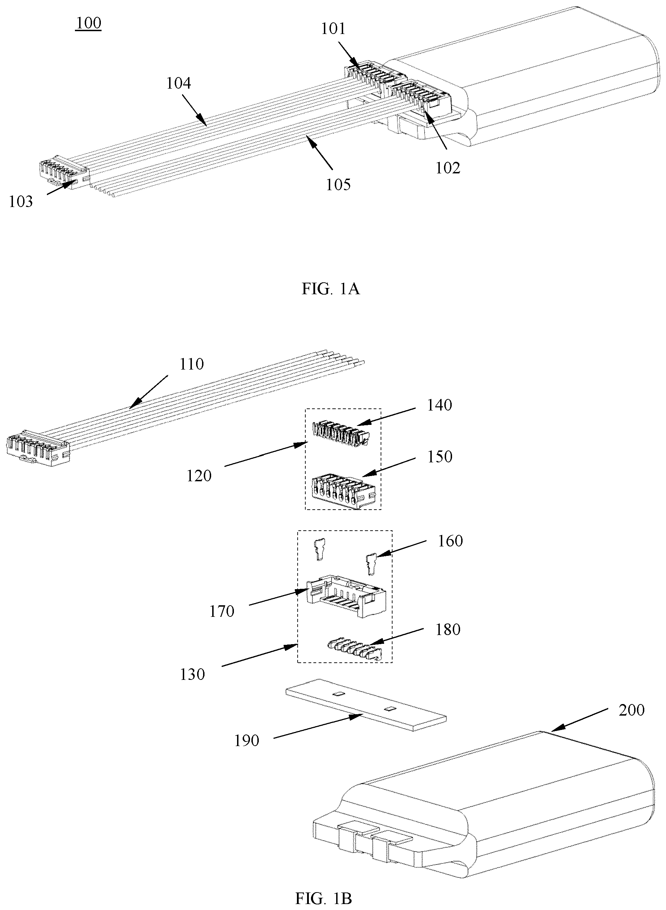

The present disclosure provides a battery assembly that solves the problem of low space utilization of battery assembly in the prior art. Referring to FIGs. 1A and 1B, the present disclosure provides a battery assembly 100. The battery assembly 100 includes a circuit board 190, a male connector 120, a female connector 130, a wire 110, and a battery 200. The wire 110 is electrically connected to the male connector 120. The battery 200 includes a step structure 203. The circuit board 190 is provided on the step structure 203 and is electrically connected to the battery 200. The female connector 130 is provided on the circuit board 190 and is electrically connected to the circuit board 190. The male connector 120 may be plugged into the female connector 130. When the male connector 120 is plugged into the female connector 130, the female connector 130 is electrically connected to the male connector 120. The circuit board 190 is provided on the step structure 203, which may save space to a certain extent. The wire 110 is electrically connected to the circuit board 190 through the male connector 120 and the female connector 130, which is highly reliable and easy to assemble.

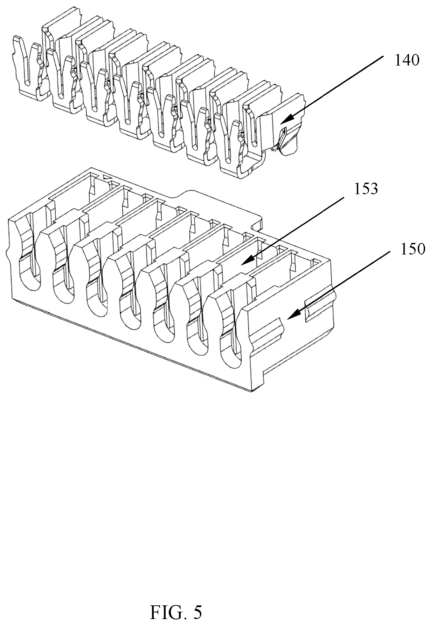

In some embodiments, as shown in FIG. 1B and FIG. 5, the male connector 120 includes a first metal member 140 and a plug member 150. The plug member 150 includes a main portion, a recess and/or a protrusion disposed in an outer wall of the main portion. The main portion is provided with a plurality of cavities 153 that accommodate the first metal member 140. Each of the plurality of cavities 153 accommodates one first metal member 140. The first metal member 140 includes a U-shaped portion 141 with a U-shaped notch 144 and two elastic pieces 142 disposed opposite each other, and the U-shaped portion 141 is connected to the two elastic pieces 142. The wire 110 passes through the U-shaped notch 144 and contacts an inner wall of the U-shaped notch 144, thereby causing the first metal member 140 to be connected to the wire 110 and the wire 110 to be electrically connected to the male connector 120. The U-shaped portion 141 and the elastic pieces 142 provided on the first metal member 140 allow a plurality of wires to quickly and easily create an electrical connection to the circuit board 190. It may be appreciated that to save molding costs, or to reserve the plurality of cavities 153 for further improvements to the electronic device, in some embodiments, the plurality of cavities 153 are partially provided with the first metal member 140, and some of the plurality of cavities 153 are in a vacant state.

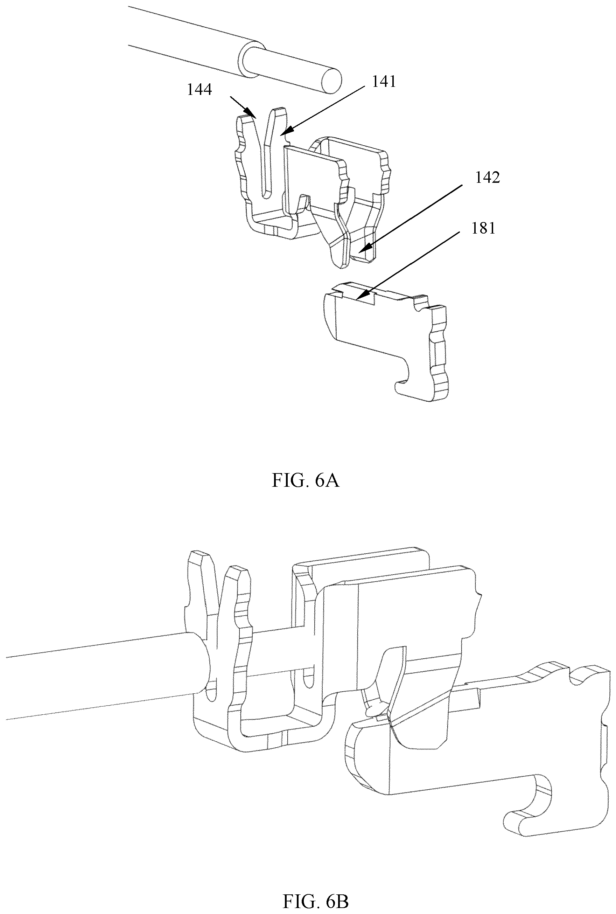

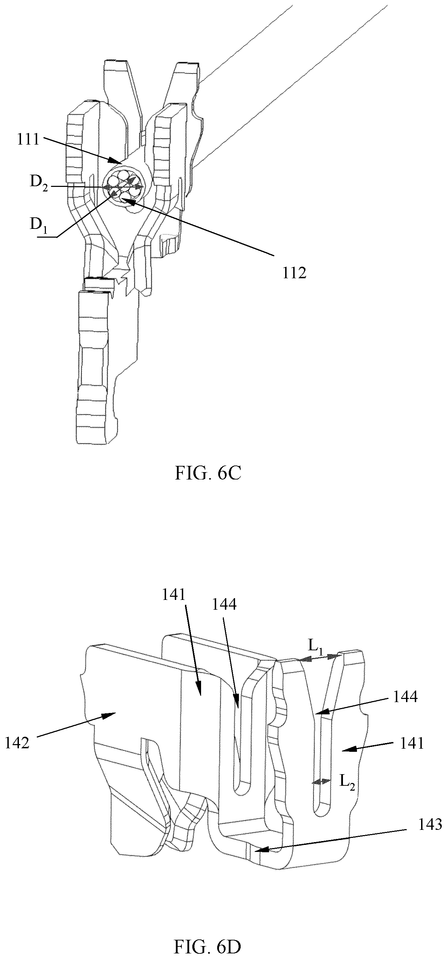

In some embodiments, the first metal member 140 includes a plurality of U-shaped portions 141. The plurality of U-shaped portions 141 are connected to each other by a connection portion 143, and the U-shaped portions 141 are arranged in a direction along the wire 110. The design of the plurality of U-shaped portions 141 ensures the strength of the snap-fit and the solidity of the electrical connection between the wire 110 and the first metal member 140. Specifically, the first metal member 140 as shown in FIG. 6A and FIG. 6D includes two U-shaped portions 141, and the two U-shaped portions 141 are connected to each other by the connection portion 143.

In the embodiment of the present disclosure, the U-shaped portion 141, the elastic pieces 142, and the connection portion 143 may be an integrally molded metal structure.

As shown in FIG. 6C and FIG. 6D, in some embodiments of the present disclosure, the wire 110 includes a signal wire 112 and a covering layer 111 wrapped around the signal wire 112. An outer diameter of the covering layer 111 is a diameter of the wire 110, with a specific value indicated by D₂, and an inner diameter of the covering layer 111 is a diameter of the signal wire 112, with a specific value indicated by D₁. It may be appreciated that in some embodiments, the signal wire 112 is formed by gathering a plurality of thin wires together, then the diameter of the signal wire 112 is the maximum outer diameter of the plurality of thin wires when gathered together. The width L₁ of an opening of the U-shaped notch 144 may be not less than the diameter D₂ of the wire 110 to allow the wire 110 to be easily and accurately pressed into the U-shaped notch 144 during an assembly process. The width L₂ of the U-shaped notch 144 at at least a portion of locations that are close to the circuit board 190, compared to the width L₁ of the opening, should be not greater than the diameter D₁ of the signal wire 112. In addition, the wire 110 is incomplete at the location of the covering layer111 in contact with the U-shaped notch to ensure that the signal wire 112 may at least partially contact the first metal member 140 to ensure that the signal wire 112 forms an electrical connection with the first metal member 140 to electrically connect the wire 110 with the male connector 120.

Distinguished from the above features, some electronic devices in prior art have a variety of different functional assemblies built-in, requiring a plurality of wires to be electrically connected to different functional assemblies to supply power to different functional assemblies. The plurality of wires need to form an electrical connection with the circuit board 190. When each wire is assembled into the plug member, a terminal needs to be set on one end of the wire in advance, and the terminal is a section of a column-shaped rigid structure, which is convenient for handholding the terminal and inserting the plurality of wires into the plug member. However, a structural strength of a small terminal is poor, and it is not possible to insert the terminal into the plug member by handholding the terminal. A too large terminal makes a large overall structure, and a distance between two wires is difficult to be maintained at a level within 1.25mm or less. In this present disclosure embodiment, during the assembly process of the wire 110, the wire 110 may be directly pressed into the U-shaped notch 144, and a sidewall of the U-shaped notch 144 may cut through the covering layer 111 of the wire 110 under pressure, to make one end of the wire 110 fixed in the U-shaped notch 144 and make the signal wire 112 contacts with the inner wall of the U-shaped notch 144, to realize the fixing and electrical connection between the wire 110 and the male connector 120. Compared to plugging the wire 110 into the male connector 120 by the terminal to realize the electrical connection between the wire 110 and the male connector 120, there is no need for the terminal, and the wire may be directly assembled into the plug member 150. Thus, when the wire 110 is drawn to be parallel, a distance L₃ between centerlines of at least a portion of adjacent wires 110 may be not greater than 1.2 mm. The volume of each structure is further reduced, the distance between centerlines of the wire 110 may be not greater than 1 mm. When a finer diameter wire 110 is chosen, the distance between centerlines of the wire 110 may be not greater than 0.7 mm.

In some embodiments, a cross-section of the cavity 153 along an extension direction is a U-shaped structure 154, with at least a portion of a width of the U-shaped structure 154 decreasing and then increasing from a position close to the circuit board 190 toward the opening of the U-shaped structure 154. An opening direction of the U-shaped structure 154 is away from a direction of the circuit board 190. More specifically, at least a portion of the width of the U-shaped structure 154 transitions from greater than the diameter of the wire 110 to less than the diameter of the wire 110, and to greater than the diameter of the wire 110 from a position near the circuit board 190 to the opening direction of the U-shaped structure 154. Due to the limitation of the width being less than the diameter of the wire 110, it is difficult to detach the wire 110 from the opening of the U-shaped structure 154 after it has been assembled into the U-shaped structure 154 to increase the stability of the wire 110 during use. Moreover, the width of the U-shaped structure 154 near the opening of the U-shaped structure 154 is greater than the diameter of the wire 110, which may facilitate the snap of the wire 110 into the cavity.

In some embodiments, as shown in FIGs. 1B, 6A, and 6B, the female connector 130 includes a female connector body 170 and a second metal member 180. The female connector body 170 includes sidewalls on both sides for fixing, a bottom plate provided with slits for the second metal member 180 to pass through, and a back plate with a concave and convex structure for positioning with the male connector 120. The second metal member 180 includes a bottom portion soldered to the circuit board 190 and a plate body for insertion into the elastic pieces 142 of the first metal member. The second metal member 180 and the circuit board 190 are soldered to form an electrical connection, and the plate body of the second metal member 180 is inserted into a gap in the bottom plate of the female connector body 170 to form a positioning. When the plug member 150 is plugged with the female connector 130, the second metal member 180 is plugged between the two elastic pieces 142 of the first metal member 140, and the second metal member 180 is provided with a beveled structure 181 near the elastic pieces 142, which facilitates the elastic pieces 142 to be plugged into and contacted with the second metal member 180 to form an electrical connection. The circuit board 190 is provided with communication solder joints 192 for the second metal member 180 to be soldered to the circuit board 190 and to form an electrical connection between the second metal member 180 and the circuit board after the soldering. Therefore, it is not difficult to understand that the wire 110 form the electrical connection through the first metal member 140, the second metal member 180, and the circuit board 190.

In some embodiments, the female connector 130 further includes a fixing plate 160. A slot 174 is provided on a sidewall of the female connector body 170. The fixing plate 160 is inserted into the slot 174 of the female connector body 170, and a bottom portion of the fixing plate 160 is soldered to a fixing soldering joint 191 on the circuit board 190 to position the female connector body 170.

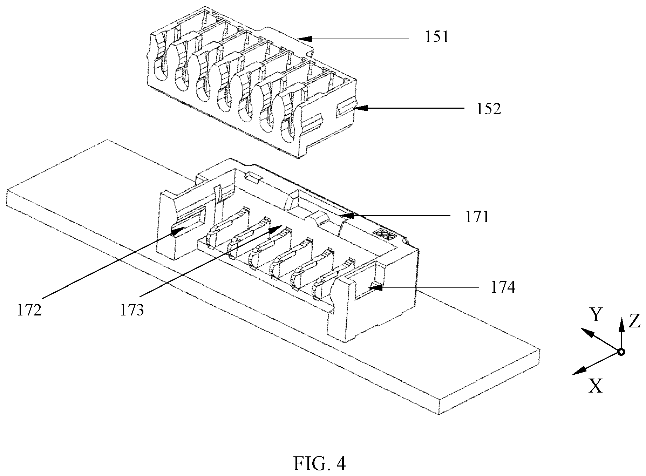

In some embodiments, as shown in FIG. 1B and FIG. 4, the female connector 130 is provided with a slot 173 in the direction away from the circuit board 190. When the male connector 120 is plugged into the female connector 130, the male connector 120 may be plugged into the female connector 130 from the direction of the slot 173. Specifically, as in the embodiment shown in FIG. 4, two sidewalls of the female connector body 170 and the back plate connected between the two sidewalls enclose a holding space, and an opening of the holding space in the direction of the bottom plate of the female connector away from the female connector is the slot 173. When the male connector 120 is plugged into the female connector 130, the male connector 120 is plugged into the female connector 130 through the slot 173, and compared to the way in which the male connector 120 is plugged into the female connector 130 in the direction of the circuit board 190 parallel to the circuit board 190, there is no need to leave a space region around the female connector 130 that is convenient for the male connector 120 being plugged into the female connector 130, which may increase the volume of the battery assembly that is required to be occupied inside the holding compartment and improve the space utilization of the holding compartment. In the present disclosure , the direction away from the circuit board 190 may be perpendicular to the direction of the circuit board. Or the direction away from the circuit board 190 may be at an included angle to the direction perpendicular to the plane of the circuit board and away from the direction of the circuit board 190, e.g., a direction with an included angle of less than 60° to the direction perpendicular to the plane of the circuit board and away from the direction of the circuit board 190.

More specifically, one of the male connector 120 and the female connector 170 is provided with a protrusion extending in a direction perpendicular to the extension direction of the wire, and the other is provided with a snapping groove cooperating therewith. An extension direction of the snapping groove is parallel to the direction of the wire. In the embodiment shown in FIG. 4, the female connector body 170 is provided with snapping grooves opposite each other on inner wall surfaces of the two sidewalls of the female connector body 170, and the snapping grooves are first snapping grooves 172. A protrusion, which is a first protrusion 152, is provided on an outer side wall of the main body portion of the plug member 150. After the plug member 150 is plugged into the female connector body 170, the first protrusion 152 is embedded in the first snapping grooves 172 such that the plug member 150 is positioned in a Y direction with respect to the female connector body 170.

Similarly, one of the male connector 120 and the female connector 130 is provided with a protrusion extending in a direction parallel to the direction of the wire 110, the other is provided with a snapping groove that cooperates therewith, and the extension direction of the snapping groove is perpendicular to the direction of the wire. In the embodiment shown in FIG. 4, a snapping groove 172 is provided on the female connector body 170, which is a second snapping groove. A protrusion 152 is provided on the plug member 150, which is a second protrusion. After the plug member 150 is plugged into the female connector body 160, the second protrusion 152 is embedded in the second snapping groove 172, and the plug member 150 is positioned in a Z direction and an X direction. It should be noted that in the present disclosure, the direction or extension direction of the wire 110 refers to the direction in which the wire 110 extends after it has been straightened.

In some embodiments, as shown in FIG. 1A, the circuit board 190 may be provided with a plurality of female connectors 130. At least a portion of second metal members 180 of the at least two female connectors 130 are electrically connected. In other words, the plurality of female connectors 130 on the circuit board 190 may be electrically connected to each other for signaling, and signaling between functional assemblies connected to the wires 110 connected to the different female connectors 130 may be performed through the plurality of female connectors 130 and the circuit board 190. Specifically, as in the embodiment shown in FIG. 1A, the battery assembly 100 includes a first female connector 101, a second female connector 102. The first female connector 101 is connected to the wire 104, and both the first female connector 101 and the second female head 102 are provided on the circuit board 190. At least a portion of the second metal member 180 in the first female connector 101 and the second female connector 102 may be connected through the connection alignment on the circuit board 190. At this time, the signal may be transmitted between the wire 104 connected to the first female connector 101 and the wire 105 connected to the second female connector 102.

The battery assembly 100 further includes a bending member 202. One end of the bending member 202 is connected to the positive and negative electrodes of the battery 200, and the other end of the bending member 202 is connected to electrode soldering joints 201 on the circuit board 190, so as to realize the electrical connection between the battery 200 and the circuit board 190 through the bending member 202. The bending member 202 is a material capable of bending and having an electrically conductive function, such as a copper sheet, a wire, a metal wire, etc., so that the battery 200 is electrically connected to the circuit board 190, and through the bending of the bending member 202, the circuit board 190 is capable of being electrically connected to the battery 200, and at the same time, it is convenient to set the circuit board 190 on the step structure 203 of the battery 200. It may be appreciated that other embodiments of the present disclosure, the battery 200 may also be electrically connected to the circuit board 190 by setting spring-loaded pins on the main circuit board 190 and setting contacts on the battery 200.

Referring to FIGs. 1A and 1B, the present disclosure also provides another battery assembly 100A. The battery assembly 100A includes a circuit board 190A, a male connector 120A, a female connector 130A, a wire 110A, and a battery 200A. The structures and connection manners of the circuit board 190A, the male connector 120A, the female connector 130A, the wire 110A, and the battery 200A are the same as that of the battery assembly 100. A distance between at least a portion of the adjacent wires 110A connected to the female connector 130A is not greater than 1 mm, or not greater than 0.7 mm. The battery assembly 100A differs from the battery assembly 100 in that the circuit board 190A in the battery assembly 100A may also be spaced apart from the battery 200A instead of being provided on the step structure of the battery 200A. Alternatively, some embodiments of the battery assembly 100A may not have the step structure. It may be connected by any electrically conductive substance such as a metal sheet, a wire 210, a spring contact, or the like.

Generally, the battery 200 electrically connected to the first component for a protection plate, the protection plate is set up with a battery protection circuit for stabilizing the current and voltage to ensure the stability of the power supply, and then connected to the circuit board by the protection plate to the power supply to the electronic components. Since the way of connecting the wires 110 to the circuit board through the male connector 120 and the female connector 130 in the present disclosure may save a lot of space on the circuit board, the size of the circuit board may be made so small that it may be merged with the protection board into one board to reduce the assembly process and the production process. In other words, some embodiments of the present disclosure have a circuit board on which a battery protection circuit is provided.

In some embodiments of the present disclosure, the female connector 130 may or may not be connected to one end of the wire 110 away from the circuit board 190, with the end of the female connector 130 being connected to cooperate with the male connector 120 on the functional assembly to realize the electrical connection of the wire 110 to the functional assembly. One end of the female connector 130 not being connected is soldered to the functional assembly to realize the electrical connection of the wire 110 to the functional assembly. For example, in some embodiments of the present disclosure, the main board of the wearable device is provided with another female connector, and the wire 104 is also connected to another male connector at a location away from the first female connector 101, which is plugged into the female connector on the main board, thereby electrically connecting the battery assembly 100 to the main board to supply power to the main board. The other end of the wire 105 away from the circuit board is connected to a functional assembly such as a speaker, a microphone, etc., by soldering, etc. In the embodiment of the present disclosure, since the male connector of the first female connector 101 and the second female connector 102, respectively, are provided on the circuit board 190 and may be connected through the wiring on the circuit board 190, the circuit board 190 may electrically connect the main board to the functional assemblies such as the speaker and the microphone that are connected to the wire 105. Such a wiring manner avoids that the functional assemblies need to be connected to both the battery assemblies and the main board, which may substantially reduce the length of the wire and reduce the size of the wearable device. The circuit board 190 may be provided with more than two female connectors 130, which may be expanded with a greater number of female connectors 130 to control a greater number of functional assemblies.

In closing, it is to be understood that the embodiments of the present disclosure disclosed herein are illustrative of the principles of the embodiments of the present disclosure. Other modifications that may be employed may be within the scope of the present disclosure. Thus, by way of example, but not of limitation, alternative configurations of the embodiments of the present disclosure may be utilized in accordance with the teachings herein. Accordingly, embodiments of the present disclosure are not limited to that precisely as shown and described.

## Claims

1. A battery assembly, comprising a circuit board, a male connector, a female connector, a wire, and a battery, wherein
the wire is electrically connected to the male connector;
the battery includes a step structure, and the circuit board is provided on the step structure and is electrically connected to the battery;
the female connector is provided on the circuit board and is electrically connected to the circuit board, and the male connector is capable of being plugged into the female connector; and
the female connector is electrically connected to the male connector when the male connector is plugged into the female connector.

2. The battery assembly of claim 1, wherein the female connector is provided with a slot in a direction away from the circuit board, and the male connector is plugged into the female connector through the slot.

3. The battery assembly of claim 1, wherein the male connector includes a plug member and a plurality of first metal members, the plug member is provided with a plurality of cavities for accommodating the plurality of first metal members, each of the plurality of first metal members is fixed in one of the plurality of cavities, and the plurality of first metal members are configured to electrically connect the wire and the female connector.

4. The battery assembly of claim 3, wherein each of the plurality of first metal members includes two elastic pieces provided opposite to each other, the female connector includes a female connector body and a plurality of second metal members, and when the plug member is plugged with the female connector, the plurality of second metal members are plugged between the two elastic pieces of each of the plurality of first metal members and electrically connected to the two elastic pieces, so that the plurality of first metal members are electrically connected with the female connector.

5. The battery assembly of claim 4, wherein the wire includes a signal wire and a covering layer wrapped around the signal wire, each of the plurality of first metal members are further provided with a U-shaped portion, the U-shaped portion is provided with a U-shaped notch, the wire is fixed on the U-shaped notch, and at least a portion of the wire located within the U-shaped notch excludes the covering layer and the signal wire contacts an inner wall of the U-shaped notch, so that the plurality of first metal members are electrically connected to the wire.

6. The battery assembly of claim 5, wherein an opening direction of the U-shaped notch is away from the circuit board, a width of the U-shaped notch at a position furthest away from the circuit board is not less than a diameter of the wire, and a width of at least a portion of the U-shaped notch at a position close to the circuit board is not greater than a diameter of the signal wire.

7. The battery assembly of claim 5, wherein the plurality of first metal members include a plurality of U-shaped portions, the plurality of U-shaped portions are arranged in a direction of the wire, and adjacent U-shaped portions of the plurality of U-shaped portions are connected by a connection portion.

8. The battery assembly of claim 3, wherein a cross-section of a cavity at at least a portion of locations along a length direction of the wire is a U-shaped structure, the U-shaped structure is oriented from a direction near the circuit board towards an opening direction of the U-shaped structure, and a width of the U-shaped structure transitions from greater than a diameter of the wire to less than the diameter of the wire to greater than the diameter of the wire.

9. The battery assembly of claim 1, comprising a plurality of wires, wherein the plurality of the wires are parallel connected to the male connector, and in a state in which the plurality of wires are drawn to be parallel, a distance between centerlines of at least a portion of the adjacent wires is not greater than 1.2 mm, or not greater than 1 mm, or not greater than 0.7 mm.

10. The battery assembly of claim 1, wherein one of the male connector and the female connector includes a snapping groove parallel to a direction of the wire, and the other of the male connector and the female connector includes a protrusion; and
the protrusion is embedded in the snapping groove when a plug member is plugged with the female connector.

11. The battery assembly of claim 1, wherein one of the male connector and the female connector includes a snapping groove perpendicular to a direction of the wire, and the other of the male connector and the female connector includes a protrusion; and
the protrusion is embedded in the snapping groove when a plug member is plugged with the female connector.

12. The battery assembly of claim 1, wherein the circuit board is provided with a plurality of female connectors, at least a portion of a plurality of second metal members of at least two of the plurality of female connectors are electrically connected.

13. The battery assembly of claim 1, wherein the circuit board is provided with a battery protection circuit.

14. A battery assembly, comprising a circuit board, a male connector, a female connector, a battery, and a plurality of wires, wherein
the plurality of wires are provided in parallel and electrically connected to the male connector;
the female connector is provided on the circuit board and is electrically connected to the circuit board, and a plug member is plugged into the female connector in a direction away from the circuit board; and
the male connector is electrically connected to the male connector when the male connector is plugged with the female connector, and a distance between at least a portion of adjacent wires of the plurality of wires is not greater than 1 mm, or not greater than 0.7 mm.

15. The battery assembly of claim 14, wherein the male connector includes a plug member and a plurality of first metal members, the plug member is provided with a plurality of cavities for accommodating the plurality of first metal members, each of the plurality of first metal members is fixed in one of the plurality of cavities, and the plurality of first metal members are configured to electrically connect the wire and the female connector.

16. The battery assembly of claim 14, wherein each of the plurality of first metal members includes two elastic pieces provided opposite to each other, the female connector includes a female connector body and a plurality of second metal members, and when the plug member is plugged with the female connector, the plurality of second metal members are plugged between the two elastic pieces of each of the plurality of first metal members and electrically connected to the two elastic pieces, so that the plurality of first metal members are electrically connected with the female connector.

17. The battery assembly of claim 14, wherein the wire includes a signal wire and a covering layer wrapped around the signal wire, each of the plurality of first metal members are further provided with a U-shaped portion, the U-shaped portion is provided with a U-shaped notch, the wire is fixed on the U-shaped notch, and at least a portion of the wire located within the U-shaped notch excludes the covering layer and the signal wire contacts an inner wall of the U-shaped notch, so that the plurality of first metal members are electrically connected to the wire.

18. The battery assembly of claim 14, wherein an opening direction of the U-shaped notch is away from the circuit board, a width of the U-shaped notch at a position furthest away from the circuit board is not less than a diameter of the wire, and a width of at least a portion of the U-shaped notch at a position close to the circuit board is not greater than a diameter of the signal wire.

19. A wearable device, comprising a battery assembly according to any one of claims 1-18.

20. The wearable device of claim 19, further comprising a functional assembly, a motherboard, one end of at least a portion of the wire of the battery assembly away from the circuit board is connected with the male connector, the motherboard is connected with the female connector, and the wire is electrically connected to the motherboard through plugging of the male connector and the female connector.
